Europäisches Patentamt

European Patent Office

Office européen des brevets

(19)

(11) Publication number:
0 267 979
A1

## (12) EUROPEAN PATENT APPLICATION

(21) Application number: 86115965.5

(22) Date of filing: 17.11.86

(51) Int. Cl.4: B23K 26/14

(43) Date of publication of application:
25.05.88 Bulletin 88/21

(84) Designated Contracting States:
DE FR GB

(71) Applicant: R T M Istituto per le Ricerche di
Tecnologia Meccanica e per l'Automazione
Regione Lime
I-10080 Vico Canavese(IT)

(72) Inventor: Cantello, Maichi
Corso Cavour, 1
I-10011 Aglie'(IT)
Inventor: Ghiringhello, Guglielmo
Via IV Novembre, 25
I-10010 Quincinetto(IT)
Inventor: Breda, Italo
Via Costituzione, 5
I-10080 Vico Canavese(IT)

(74) Representative: Prato, Roberto et al
c/o Ingg. Carlo e Mario Torta Via Viotti 9
I-10121 Torino(IT)

(54) Method and apparatus for welding superimposed and partially spaced metal sheets.

(57) A method is described for welding two metal sheets (1,2) positioned at a predetermined distance (d). The weld zone (21) of a metal sheet is subjected both to the action of a laser beam (6) and to a pressure, conveniently exerted by means of a suitable shielding fluid which causes displacement of it towards the weld zone (22) of the other metal sheet (2) by a distance at least equal to the predetermined distance (d) with consequent realisation of mechanical welding between the zones (21,22) of the two said metal sheets (1,2).

Fig.4

# METHOD AND APPARATUS FOR WELDING SUPERIMPOSED AND PARTIALLY SPACED METAL SHEETS

The present invention relates to a method and an associated apparatus of effecting welding of superimposed and partially spaced metal sheets.

There are essentially two known methods currently in use to effect welding of metal sheets, the first (resistance welding) makes uses of the heat developed by the passage of current between the metal sheets pressed by respective electrodes; the second (laser welding) employs the heat of a laser beam generated by an associated source and directed towards the zone to be welded. It is observed that these methods are not able to obtain a good performance, from the point of view of the results obtained, if the metal sheets have even a small degree of separation before welding. In fact, in the case of resistance welding, it is not alway easy to obtain the essential electrical contact between the metal sheets to be welded in that it is necessary to exert on the outer faces of the metal sheets oppositely directed pressures of considerable magnitude by means of suitable pincers. In the case of laser welding it is possible to weld metal sheets even if they are partially spaced by up to a maximum value of about 0.2 mm by operating at the high velocities of several m/min typical of laser technology. In this situation the meniscus which forms at the lower surface of the upper metal sheet on which the laser beam impinges is exploited in such a way as to make the meniscus itself come into contact with the upper surface of the underlying metal sheet and thereby obtain welding between the two metal sheets. With currently known laser technology it is impossible to weld metal sheets spaced by more than 0.2 mm by means of a laser beam without operating at particularly low velocities, with the disadvantage of heating a very wide zone around that in which the welding is effected. In this latter case a greatly pronounced meniscus is obtained on the upper sheet in such a way as to allow connection to the lower metal sheet; this, however, involves the use of a laser source of particularly high power and also an unaesthetic and at times unacceptable, surface deformation of the metal sheet in the region of the zone to be welded. To allow good quality laser welding according to the known art it is essential therefore to operate with clamping systems for bringing the metal sheets together.

These systems are, however, particularly critical when the metal sheets are not flat but, for example, curved or drawn with a double curvature. In these cases the pressure required to draw the metal sheets together can be very high and involves, upon release, a strong mechanical stressing in the region of the weld because of the elastic returning force of the metal sheets. The welding zone is therefore held constantly under tension and is therefore more easily subject to breakage.

The object of the present invention is that of providing a method and at least one device which allows welding of two superimposed and spaced metal sheets without thereby incurring the disadvantages encountered with the methods of known type described above.

The said object is achieved by the present invention in that it relates to a method for welding a first metal sheet to a second metal sheet, which are disposed at a certain distance apart at respective welding zones, characterised by the fact that it comprises the following operations:

1) impinging the welding zone of the first metal sheet with a laser beam emitted from an associated source;

2) creating across the opposite surfaces of the welding zone of the said first metal sheet a pressure difference with the higher pressure on the surface impinged by the laser beam, for the purpose of inducing a displacement of the fused zone of the first metal sheet in the direction of the fixed zone of the said second metal sheet by a distance at least equal to the said certain distance thereby allowing the union of the weld pools between the said zones.

The present invention likewise relates to apparatus for welding a first metal sheet to a second metal sheet having a certain distance between respective welding zones, characterised by the fact that it comprises

a source of a laser beam which can impinge the welding zone of the first metal sheet on the side opposite that facing the welding zone of the second metal sheet and,

means for conveying a fluid at least in correspondence with the welding zone impinged by the said laser beam in such a way as to transmit to this zone a thrust which causes, in use and under the action of the said laser beam, a displacement of the fused material in the direction of the welding zone of the said second metal sheet by a distance at least equal to the said certain distance allowing the said zones to become welded.

For a better understanding of the present invention various embodiments are described hereinbelow purely by way of non-limitative example and with reference to the attached drawings, in which:

Figure 1 schematically illustrates a first technique for welding superimposed metal sheets, according to the principles of the present invention;

Figure 2 schematically illustrates a variant of the technique illustrated in Figure 1;

Figure 3 is a photograph on an enlarged scale, of two metal sheets welded by utilising the method of the present invention;

Figure 4 is a schematic representation of Figure 3;

Figure 5 is a section, on an enlarged scale, of two metal sheets welded with a variant of the method of the present invention; and

Figure 6 is a schematic reproduction of Figure 5.

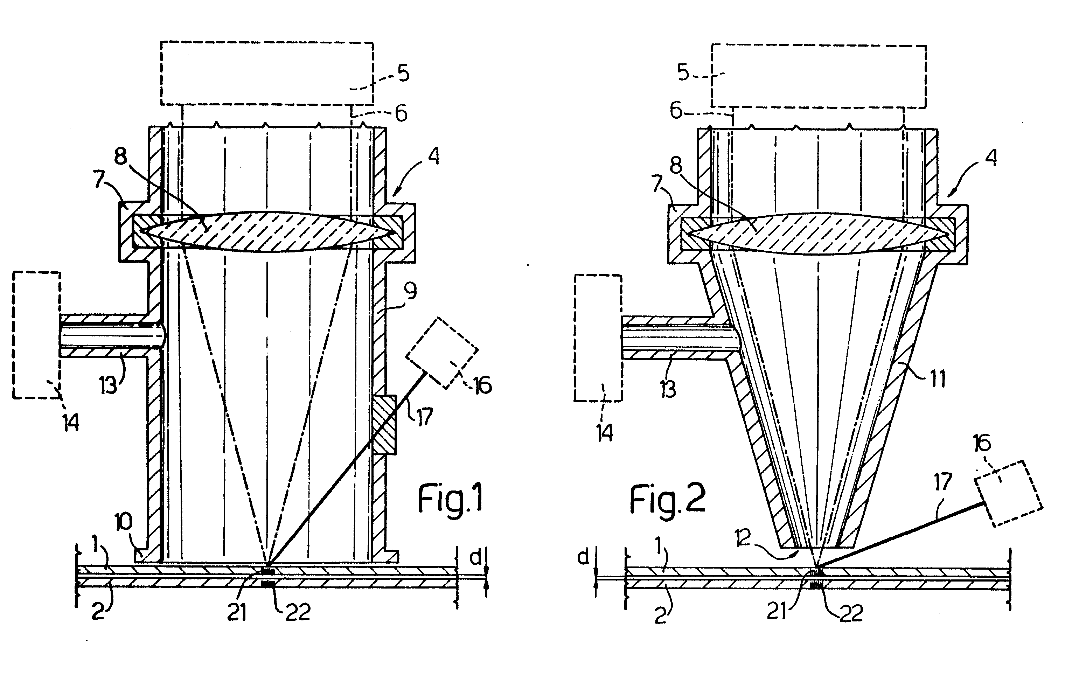

With particular reference to Figures 1 and 2, two metal sheets are indicated with the reference numerals 1 and 2, and the first is disposed over the second and spaced by a certain distance indicated with the letter d.

These metal sheets are illustrated as separate and flat; it is obvious, however, that the metal sheets 1 and 2 could be curved or drawn or could be constituted by a single metal sheet folded to a U-shape.

In both Figures 1 and 2 the reference numeral 4 indicates an output heat of a laser welder which has, upstream, a source 5 which can emit a laser beam 6. The output head 4 has an upper, essentially tubular, portion 7 which supports, in a known way, a focussing lens 8 for the beam 6. With particular reference to Figure 1, the head 4 has a lower portion 9 of essentially tubular structure having at its end an annular lip 10 extending radially outwardly. In use, this lip 10 can be positioned at a minimum distance (for example 0.5 mm) from the upper surface of the metal sheet 1. With reference to Figure 2, the output head 4 has a lower, hollow portion 11 of conical structure, a circular outlet mouth 12 which can be positioned over the metal sheet 1 and at a predetermined distance (for example of the order of 4 or 5 mm). Conveniently, the diameter of the circular outlet mouth is of the order of 6 mm.

Both the lower portion 9 and 11 described with reference to Figures 1 and 2 have a tubular appendage 13 which is connected to a respective reservoir 14 within which is contained a gas of known type under pressure. Finally, the reference numeral 16 indicates a feed device for a metal wire 17 which can, in use, serve the function of filler material in correspondence with the weld effected by means of the outlet head 4. In particular, it can be seen that in Figure 1 the wire 17 traverses the tubular portion 9 whilst, with reference to Figure 2, the wire 17 reaches the upper surface of the sheet metal by passing under the outlet mouth 12 of the lower conical portion 11 of the head 4.

Finally, in Figures 1 and 2 the reference numerals 21 and 22 indicate two zones in the metal sheet 1 and the metal sheet 2 respectively, which must be welded together by the method of the present invention.

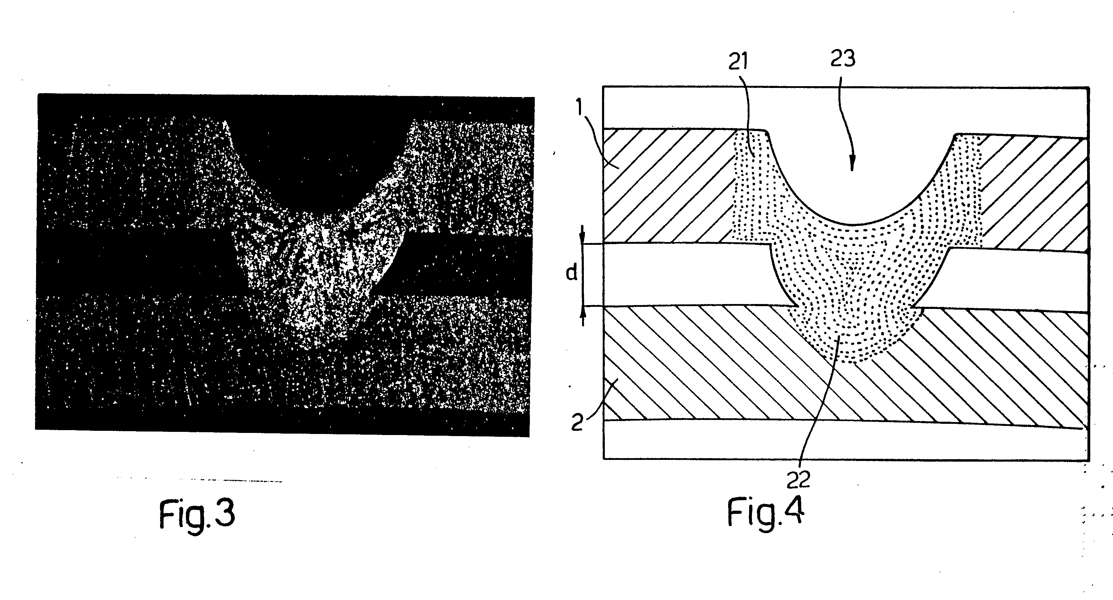

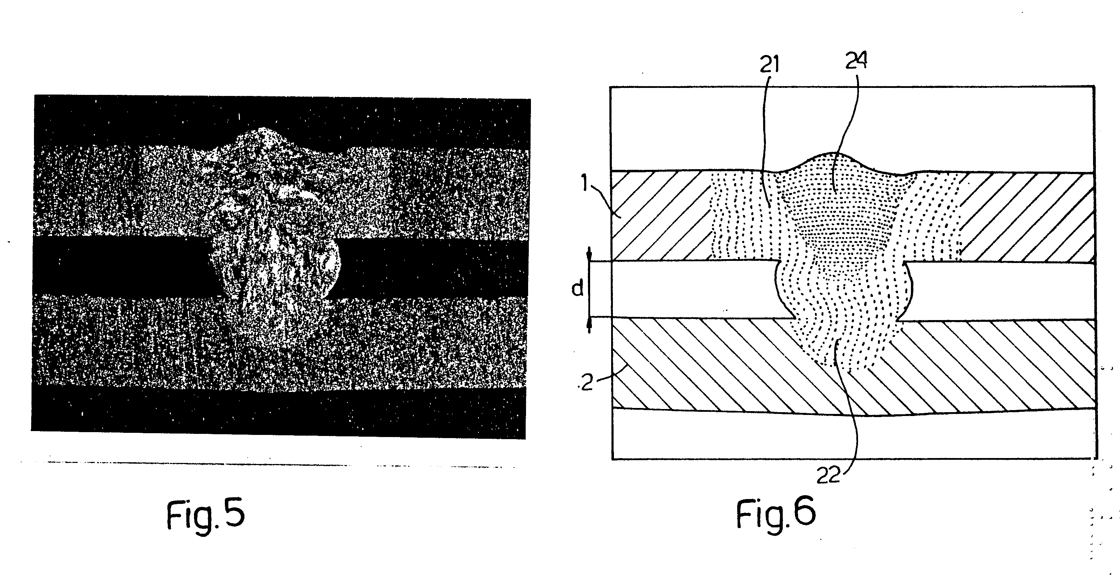

As already said partly hereinabove, the photograph 3 and the associated schematic representation illustrated in Figure 4 relate to a section of the metal sheets 1 and 2 taken through a weld formed according to the method of the present invention. In particular, it can be seen how a good portion of the zone 21 has sunk towards the zone 22 welding itself to this latter and leaving a cavity 23 above it. With reference to the photograph of Figure 5 and the associated schematic representation shown in Figure 6, it can be seen how the zones 21 and 22 are welded together well and there is moreover present a certain quantity of filler material 24 which compensates for the sinking of part of the zone 21 towards the zone 22.

The proposed method according to the present invention for welding the metal sheets 1 and 2 in correspondence with their zones 21 and 22 essentially involves performing the following operations. First of all, the zone 21 of the upper metal sheet 1 is impinged by the laser beam emitted by the source 5; moreover, the upper surface of this zone 21 is subjected to a pressure exerted by the shielding fluid coming from the reservoir 14 in such a way as to obtain a gradual displacement of the material of this zone 21 towards the zone 22 of the metal sheet 2. By suitably adjusting the welding parameters, such as, for example, the power connected with the laser beam and the speed of working, as well as the pressure of the fluid supplied through the appendage 13, part of the material from the zone 21 can be made to fill the distance d which separates the metal sheets 1 and 2 in such a way as to effect the desired welding between the metal sheets themselves.

The pressure on the surface of the zone 21 can be exerted essentially in the two equivalent ways illustrated in Figures 1 and 2. In particular, in Figure 1 this pressure can be considered essentially of static type in that there is no turbulent movement of the fluid around the zone 21 to be welded; in fact, the fluid supplied through the tubular appendage 13 flows out from the lower portion 9 in correspondence with the annular lip 10 which is maintained, as already said, as close as possible to the surface of the metal sheet 1 for the purpose of maintaining the over pressure within the interior of the portion 9 at the desired magnitude.

The over pressure on the zone 21 of the metal sheet 1 which is obtained, on the other hand, by means of the conical portion 11 of the head 4 of Figure 2 can be considered as being of dynamic type; in fact, it is the flow of the shielding fluid directed under pressure onto the surface of the zone 21 of Figure 2 which determines the displacement of this latter towards the zone 22 of the underlying metal sheet 2.

It is evident that in one or the other of the above described cases the welding can be completed with the introduction of filler material (indicated 24 in Figure 6) which allows the elimination of the superficial channel resulting from this process and results in an overall reinforcement of the weld thus obtained.

From a study of the characteristics of the method proposed for effecting welding of two metal sheets the advantages which can be obtained from it are evident. First of all, it is able to effect welding between metal sheets which are even relatively spaced from one another (even up to 0.7 to 0.8 mm) and hold the metal sheets very close to one another. Likewise, it is not required to use laser sources of high power for melting a zone much wider than that necessary for the welding. Further, not having to compress the two metal sheets in an excessive manner the unaesthetic dimpling of the surfaces in correspondence with the welded zones is likewise avoided, and, above all, formation of those tensions concentrated on the welded zones and due to the elastic returning force of the metal sheets pressed against one another during the welding are also avoided.

Finally, it can be seen with reference to the photographs of Figures 3 and 5 how the heat affected zones of the metal sheets 1 and 2 are extremely restricted given the high speed of working; this constitutes an undoubted advantage from the point of view of the overall characteristics of the metal sheets 1 and 2 after welding.

Finally, it is clear that the method and welding head 4 described above can be modified and varied without by this departing from the scope of the present invention.

First of all, it is evident that the most important characteristic is that of creating a pressure difference between the opposite surfaces of the metal sheet 1 in correspondence with the welding zone 21 so that the fused material of this latter is pressed towards the corresponding welding zone 22 of the metal sheet 2. In other terms, this means that an equivalent method to that described above could consist essentially in creating a depression in the space situated between the facing surfaces of the metal sheets 1 and 2 in such a way as to suck the melted material 21 of the metal sheet 1 to bring it into contact with the zone 22 of the metal sheet 2.

It is likewise apparent that for the purpose of obtaining a weld between metal spaced further than that indicated it would be possible to take into consideration the possibility of effecting a heating in a considerably wider area around the welding zone of the upper sheet, whilst again subjecting this zone to a pressure which causes deformation of it and connection to the corresponding welding zone of the lower metal sheet.

## Claims

1. A method for welding a first metal sheet (1) to a second metal sheet (2), which sheets are disposed at a certain distance (d) in correspondence with the respective zones (21,22) to be welded, characterised by the fact it comprises the following operations:

1) impinging the welding zone (22) of the first metal sheet (1) with a laser beam (6) emitted from an associated source (5); and

2) creating a pressure difference between the opposite surfaces of the welding zone (21) of the said metal sheet (1) with the higher pressure on the surface impinged by the laser beam (6) for the purpose of inducing a displacement of the fused zone (21) of the said first metal sheet (1) in the direction of the fused zone (22) of the said second metal sheet (2) by a distance at lease equal to the said distance (d) thereby allowing the union of the weld pools between the said zones (21,22).

2. A method according to Claim 1, characterised by the fact that the said pressure difference is obtained by exerting a pressure by means of a fluid on the surface of the said zone (21) of the said first metal sheet (1) impinged by the said laser beam (6).

3. A method according to Claim 2, characterised by the fact that the fluid utilised for creating the said pressure is constituted by the welding process shielding gas.

4. A method according to Claim 2 or Claim 3, characterised by the fact that the said pressure is exerted by conveying it onto the welding zone (21) of the said first metal sheet (1).

5. A method according to Claim 2 or Claim 3, characterised by the fact that the said pressure is exerted in an essentially static manner by maintaining the welding zone (21) and a corresponding peripheral portion of the surface of the said metal sheet (1) in the presence of a pressure the value of which is greater than the pressure present on the opposite face of the said welding zone (21) without, however, causing a significant movement of the said fluid in correspondence with the said welding zone (21) impinged by the said laser beam (6).

6. A method according to any of the preceding Claims, characterised by the fact that it includes an operation consisting essentially of simultaneously introducing metal filler material (24) onto the upper surface of the said welding zone (21) of the said first metal sheet (1) for the purpose of essentially filling a channel caused by the displacement of the fused zone (21) of the said first metal sheet ((1) towards the said welding zone (22) of the said second metal sheet (2) under the action of the said pressure difference.

7. Apparatus for welding a first metal sheet (1) to a second metal sheet (2) having a certain distance (d) between respective welding zones (21,22), characterised by the fact that it comprises: a source (5) of a laser beam (6) which can impinge the welding zone (21) of the first sheet (1) on the side opposite that facing the welding zone (22) of the said metal sheet (2); and

means (9,11) for conveying a fluid at least in correspondence with the said welding zone(21) impinged by the said laser beam (6) in such a way as to transmit to this zone (21) a thrust which, in use, and under the action of the said laser beam (6) causes a displacement of the fused material in the direction of the welding zone (22) of the said second metal sheet (2) for a distance at least equal to the said distance (d), consequently allowing the said zones (21,22) to be welded together.

8. Apparatus according to Claim 7, characterised by the fact that the said conveying means essentially comprise a tubular portion (9) defining a chamber within which the said fluid is supplied under pressure, which can be located over the said zone (21) of the said metal sheet (1) impinged by the laser beam (6) in such a way as to be almost in contact with the upper surface of the said metal sheet (1) and simultaneously to surround the said welding zone (21) at a predetermined distance.

9. Apparatus according to Claim 8, characterised by the fact that the said tubular portion (9) has an annular radial lip (10) at its end facing the surface of the said first metal sheet (1).

10. Apparatus according to Claim 8 or Claim 9, characterised by the fact that it includes means (16) for supplying filler material (17) over the said welding zone (21) of the said first metal sheet (1) through the said tubular portion (9).

11. Apparatus according to Claim 7, characterised by the fact that the said conveying means for the said fluid are essentially constituted by the hollow portion (11) of conical structure connected, essentially at its base, to supply means (14) for the said fluid under pressure, and having a vertex defining an outlet mouth (12) by means of which the said fluid under pressure is conveyed at speed onto the surface of the said welding zone (21) impinged by the said laser beam (6) and belonging to the said first metal sheet.

12. Apparatus according to any of Claims from 7 to 11, characterised by the fact that the said conveying means (9,11) constitute a terminal portion of a head (4) supporting focussing means (8) for the said laser beam (6).

Fig.1

Fig.2

Fig.3

Fig.4

0 267 979

24

21

22

1

d

2

Fig.6

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 126 547 (BRITISH SHIPBUILDERS)<br><br>* Page 2, lines 13-22; page 3, lines 3-7; page 6, line 5 - page 8, line 14; figures 1-6 * | 1-4,6-8,10,12 | B 23 K 26/14 |
| A | US-A-4 377 735 (KATSUSHIRO MINAMIDA et al.)<br>* Column 2, lines 16-24; column 5, lines 55-59; column 7, line 45 - column 8, line 11; figures 3,4,10 * | 1-4,7,11,12 | |
| A | PATENT ABSTRACTS OF JAPAN, vol. 8, no. 280 (M-347)[1717], 21st December 1984; & JP-A-59 150 683 (TOSHIBA K.K.) 28-08-1984<br>* Whole abstract * | 1-4,7-9,12 | TECHNICAL FIELDS SEARCHED (Int. Cl.4) |
| A | PATENT ABSTRACTS OF JAPAN, vol. 8, no. 262 (M-341)[1699], 30th November 1984; & JP-A-59 133 985 (TOSHIBA K.K.) 01-08-1984<br>* Whole abstract * | 1 | B 23 K |

The present search report has been drawn up for all claims

| Place of search | Date of completion of the search | Examiner |
|---|---|---|
| THE HAGUE | 31-07-1987 | ARAN D.D. |